# EUROPÄISCHE PATENTANMELDUNG

(11) **EP 1 696 545 A2**
(43) Veröffentlichungstag der Anmeldung: **30.08.2006**
(21) Anmeldenummer: 06100282.0
(22) Anmeldetag: 12.01.2006
(51) Int. Cl.: H02M 3/335

(54) **Analogausgabeeinheit**

(30) Priorität: 13.01.2005 DE 102005001680
(71) Anmelder: SIEMENS AKTIENGESELLSCHAFT, 80333 München (DE)
(72) Erfinder: Kreb, Walter, 76848 Schwanheim (DE); Lehmann, Ulrich, 76744 Wörth (DE); Schwab, Robert, 76187 Karlsruhe (DE)

(57) **Zusammenfassung**

Die Erfindung betrifft eine Analogausgabeeinheit, welcher ein Steuersignal (Sd) einer Steuereinheit (1, 2) einer Automatisierungseinrichtung zuführbar ist, aus welchem die Analogausgabeeinheit einen Gleichstrom (Ia) zum Ansteuern eines Aktors, insbesondere eines Aktors in Form eines Magnetventils (23) erzeugt. Es sind geeignete Maßnahmen vorgesehen, durch welche ein sicherheitskritisches Öffnen des Magnetventils (23) vermieden wird. Eine Störung bewirkt stets eine sicherheitsgerichtete Absteuerung (Schließen) des Magnetventils (23) .

## Beschreibung

Die Erfindung betrifft eine Analogausgabeeinheit, welcher ein Steuersignal einer Steuereinheit einer Automatisierungseinrichtung zuführbar ist, aus welchem die Analogausgabeeinheit einen Gleichstrom zum Ansteuern eines Aktors erzeugt.

In vielen Bereichen der Automatisierungstechnik werden gewöhnlich Daten zwischen einem Automatisierungsgerät und einem Aktor, z. B. ein Aktor in Form eines Regelventils, über analoge Stromsignale in einem Bereich von 0 bis 20 mA, 4 bis 20 mA oder in einem Bereich von -20 bis +20 mA ausgetauscht. Dazu übermittelt das Automatisierungsgerät einer Analogausgabeeinheit ein Steuersignal, aus welchem die Analogausgabeeinheit das Stromsignal erzeugt. Ein derartiges Automatisierungsgerät sowie eine derartige Analogausgabeeinheit ist aus dem Siemens-Katalog PCS 7, Kapitel 10 und 11, Ausgabe Oktober 2004 bekannt.

Insbesondere in einer sicherheitsgerichteten Automatisierungseinrichtung, die für kritische Anwendungen vorgesehen ist und in der im Störfall Menschenleben in Gefahr sind oder Anlagen beschädigt werden können, werden hohe Anforderungen an die Komponenten dieser Automatisierungseinrichtung gestellt. Beispielsweise muss gewährleistet sein, dass im Falle eines Kurzschlusses oder einer Unterbrechung eines aktiven Bauelementes der Analogausgabeeinheit ein zu steuerndes Brennstoffventil sicher geschlossen wird, um gefährliche Anlagenzustände zu vermeiden.
Gewöhnliche Analogausgabeeinheiten weisen Schaltmittel in Form eines Schalttransistors auf, der während einer thermischen Überlastung oder durch eine durch äußere Einflüsse verursachte Überspannung durchlegieren kann, wodurch die Emitter-Kollektor-Strecke des Schalttransistors kurzgeschlossen ist. Dies bewirkt, dass einem Stellglied ein

Stromsignal zugeführt wird, welches ein angeschlossenes Brennstoffventil öffnet oder geöffnet lässt, obwohl ein Automatisierungsgerät der Analogausgabeeinheit ein Steuersignal zum Schließen des Brennstoffventils übermittelt. Diese fehlerhafte Ansteuerung des Brennstoffventils kann zu einem gefährlichen Anlagenzustand führen.

Der Erfindung liegt die Aufgabe zugrunde, eine Analogausgabeeinheit der eingangs genannten Art zu schaffen, die für einen sicherheitsgerichteten Einsatz geeignet ist.

Diese Aufgabe wird durch die im kennzeichnenden Teil des Anspruchs 1 angegebenen Maßnahmen gelöst.

Vorteilhaft ist, dass im Falle eines Kurzschlusses oder einer Unterbrechung eines aktiven Bauelementes auf der Primärseite des Übertragers keine Energie einem Aktor, z. B. einem Aktor in Form eines Magnetventils, übertragen wird, da der Übertrager in diesem Fall nur statisch angesteuert wird. In diesem Fall schließt das Magnetventil bzw. es bleibt geschlossen, wodurch ein technischer Prozess in einen sicheren Zustand gesteuert wird.

In einer Ausgestaltung der Erfindung werden die Übertragungsverluste des Übertragers erfasst, wobei der Regler die Auswirkungen der Übertragungsverluste auf das Steuersignal ausregelt. Dadurch wird das nichtlineare Verhalten des Übertragers kompensiert.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figur 1: ein Analogausgabeteil einer Peripherieeinheit und
- Figur 2: eine redundante Automatisierungseinrichtung.

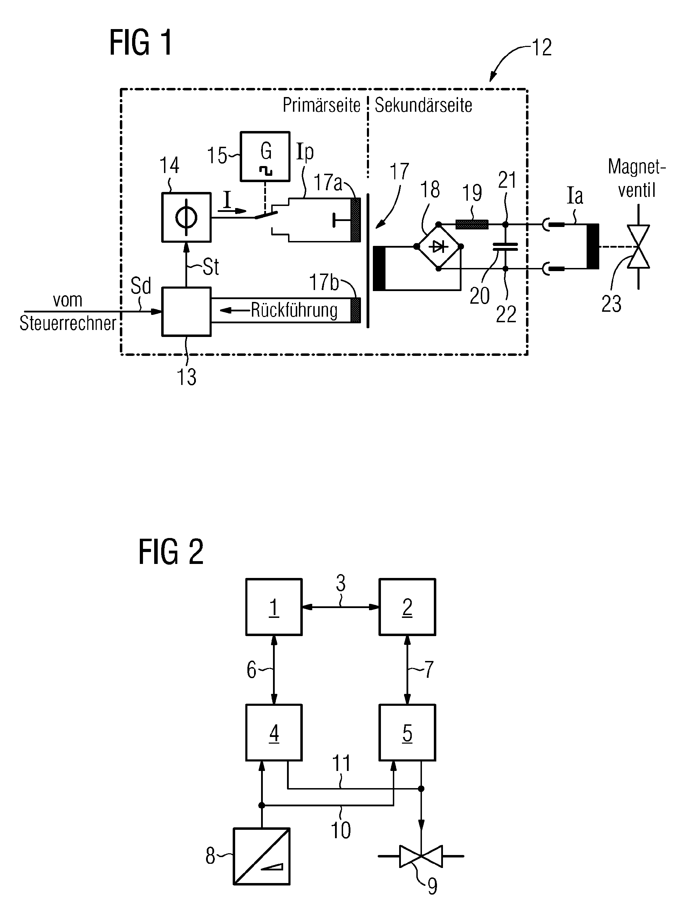

Dazu wird zunächst auf Figur 2 verwiesen, in welcher eine an sich bekannte redundante Automatisierungseinrichtung dargestellt ist. Die redundante Automatisierungseinrichtung ist gemäß einem 1-von-2-Prinzip aufgebaut und umfasst eine erste Redundanzeinheit mit einem ersten Steuerrechner 1 und einer ersten Peripherieeinheit 4 und eine zweite Redundanzeinheit mit einem zweiten Steuerrechner 2 sowie einer zweiten Peripherieeinheit 5. Die Peripherieeinheiten 4, 5 sind sowohl für einen Betrieb als Analogeingabe als auch für einen Betrieb als Analogausgabe vorgesehen. Sensoren 8, z. B. so genannte Zweileiter-Messumformer, erfassen Prozesssignale eines zu steuernden technischen Prozesses, welche von den Peripherieeinheiten 4, 5 redundant über Leitungen 10 eingelesen und über geeignete serielle oder parallele Busse 6, 7 den Steuerrechnern 1, 2 in Form von digitalen Signalen übermittelt werden. Die Steuerrechner 1, 2 verarbeiten diese Signale zu entsprechenden Steuersignalen für Aktoren 9, wobei nur eine der Redundanzeinheiten diese Steuersignale den Aktoren 9 über eine Leitung 11 übermittelt. Die Redundanzeinheiten arbeiten nach einem Master-Reserve-Betrieb, was bedeutet, dass nur eine Redundanzeinheit aktiv ist, die andere dagegen passiv geschaltet ist. Nur die aktive Redundanzeinheit steuert die Aktoren 9 über ihre Peripherieeinheit an, die andere Redundanzeinheit übermittelt ihrer Peripherieeinheit lediglich ein Nullsignal. Im vorliegenden Beispiel führt ein Analogausgabeteil von einer der Peripherieeinheiten 4, 5 einem Brennstoffventil eine Stellgröße in Form eines Stromsignals in einem Bereich von 0 bis 20 mA, 4 bis 20 mA oder in einem Bereich von -20 bis +20 mA zu. Zum Austausch von Informationen, z. B. in Form von Status- und Abgleichinformationen, ist eine Redundanzkopplung 3 vorgesehen, über welche die Redundanzeinheiten miteinander verbunden sind. Für den Fall, dass die aktive Redundanzeinheit nicht störungsfrei arbeitet, zeigt die aktive Redundanzeinheit über die Redundanzkopplung 3 der passiven Redundanzeinheit die Störung an, wodurch die gerade passive Redundanzeinheit in die aktive Betriebsart wechselt, d. h., diese Redundanzeinheit wird aktiv geschaltet und übernimmt den Master-Betrieb, dagegen wird die gerade aktive Redundanzeinheit passiv geschaltet und wechselt in den Reserve-Betrieb. Ein Wechsel der Masterschaft muss in der Art und Weise erfolgen, dass dem Brennstoffventil die Steuersignale im Wesentlichen kontinuierlich und möglichst ohne Signaleinbrüche übermittelt werden.
Darüber hinaus muss sichergestellt werden, dass das Brennstoffventil sicher angesteuert wird, da eine fehlerhafte Ansteuerung des Brennstoffventils zu einem gefährlichen Anlagenzustand führen kann. Das bedeutet, es muss gewährleistet sein, dass ein Steuersignal zum Schließen des Brennstoffventils, welches durch das Analogausgabeteil einer der Peripherieeinheiten 4, 5 einem Stellglied zuführbar ist, auch tatsächlich diesem Stellglied zugeführt wird, damit das Brennstoffventil schließt.

Ein Analogausgabeteil 12 einer Peripherieeinheit, welches auch dann zu einem sicheren Prozesszustand führt, wenn ein Aktor fehlerhaft angesteuert wird, ist in Figur 1 dargestellt.
Bestandteile dieses Analogausgabeteils 12 sind ein Regler 13, welchem ein Steuersignal Sd einer Steuereinheit zuführbar ist, eine durch den Regler 13 ansteuerbare Stromquelle 14, ferner Schaltmittel in Form eines Taktgenerators 15 und eines durch den Taktgenerator 15 steuerbaren Leistungsschalters 16. Weitere Bestandteile des Analogausgabeteils 12 sind ein Übertrager 17 und Mittel 18, 19, 20 zum Gleichrichten und Glätten eines Stromes des Übertragers 17. Der Übertrager 17 ist primärseitig versehen mit einer Wicklung 17a zur Übertragung eines eingeprägten Stromes I sowie mit einer Hilfswicklung 17b, an der eine abfallende Spannung, welche ein Maß für die Übertragungsverluste des Übertragers 17 ist, erfasst und dem Regler 13 zugeführt wird.

Im Folgenden wird die Funktions- und Wirkungsweise des Analogausgabeteils 12 näher erläutert. Der Regler 13 erzeugt aus dem digitalen Steuersignal Sd und der an der Hilfswicklung 17b abfallenden Spannung ein analoges Steuersignal St, wodurch auf der Sekundärseite des Übertragers 17 der dem Steuersignal proportionale Ausgangsstrom Ia fließt. Dazu erzeugt die Stromquelle 14 aus dem Steuersignal St zunächst einen Gleichstrom I, der die Stromquelle 14 dem Leistungsschalter 16 zuführt, welcher aufgrund der Taktung durch den Taktgenerator 15 den Strom I in Form eines im Wesentlichen kommutierten Gleichstroms Ip dem Übertrager 17 weiterleitet. Dieser Strom Ip wird übertragen, auf der Sekundärseite des Übertragers 17 gleichgerichtet und geglättet, wobei der Ausgangsstrom Ia ein an Ausgangsklemmen 21, 22 des Analogausgabeteils angeschlossenes Magnetventil 23 ansteuert. Eine Störung in Form eines Kurzschlusses oder Unterbrechung eines der aktiven Bauelemente auf der Primärseite führt nie zu einem sicherheitskritischen Öffnen des Magnetventils 23 sondern stets zu einer sicherheitsgerichteten Absteuerung (Schließen) des Magnetventils 23, da in diesem Fall der Übertrager 17 nur statisch angesteuert wird und dadurch sekundärseitig kein Ausgangsstrom fließt. Auch ein Kurzschluss oder eine Unterbrechung eines der aktiven Bauelemente auf der Sekundärseite führt stets zu einer sicherheitsgerichteten Absteuerung des Magnetventils 23, da kein Ausgangsstrom Ia fließt.

## Patentansprüche

1. Analogausgabeeinheit, welcher ein Steuersignal (Sd) einer Steuereinheit (1, 2) einer Automatisierungseinrichtung zuführbar ist, aus welchem die Analogausgabeeinheit einen Gleichstrom (Ia) zum Ansteuern eines Aktors (23) erzeugt, **dadurch gekennzeichnet, dass** die Analogausgabeeinheit mit Mitteln (2, 8, 9, 10, 13, 14, 15, 18) versehen ist, welche aus dem Steuersignal (Sd) ein Signal (Ip) zur dynamischen Ansteuerung eines Übertragers (17) erzeugen, aus dessen Ausgangssignal die Mittel den Gleichstrom (Ia) erzeugen.

2. Analogausgabeeinheit nach Anspruch 1, **dadurch gekennzeichnet, dass** das Steuersignal (Sd) einem Regler (13) zuführbar ist, der eine steuerbare Gleichstromquelle (14) mit einem Ansteuersignal (St) ansteuert, wobei ein Übertrager (17) einen Ausgangsstrom (I) der Gleichstromquelle (14) nach einer Taktung durch einen Taktgenerator (15) einem Gleichrichter (18) überträgt, dessen Ausgangsstrom (Ia) den Aktor (23) ansteuert.

3. Analogausgabeeinheit nach Anspruch 1, **dadurch gekennzeichnet, dass** der Übertrager (17) mit einer Hilfswicklung (17b) zur Erfassung der Übertragungsverluste des Übertragers (17) versehen ist, wobei der Regler (13) die Auswirkungen der Übertragungsverluste auf das Steuersignal ausregelt.
